# EUROPÄISCHE PATENTSCHRIFT

(11) **EP 2 059 417 B1**
(45) Veröffentlichungstag und Bekanntmachung des Hinweises auf die Patenterteilung: **23.04.2014**
(21) Anmeldenummer: 07788157.1
(22) Anmeldetag: 02.08.2007
(51) Int. Cl.: B60R 21/2165

(54) **GASSACKABDECKUNG**
AIRBAG COVERING
RECOUVREMENT DE POCHE A GAZ

(30) Priorität: 23.08.2006 DE 202006013133 U
(43) Veröffentlichungstag der Anmeldung: 20.05.2009
(73) Patentinhaber: Takata AG, 63743 Aschaffenburg (DE)
(72) Erfinder: KRAUS, Günter, 63773 Goldbach (DE); GURETZKI, Wolfgang, 63762 Grossostheim (DE); BAHMER, Stefan, 63868 Grosswallstadt (DE)
(74) Vertreter: Baumgärtel, Gunnar
(86) Internationale Anmeldenummer: PCT/EP2007/057992
(87) Internationale Veröffentlichungsnummer: WO 2008/022889

(56) Entgegenhaltungen:
- EP-A1- 0 523 882
- EP-A1- 0 808 750
- EP-A1- 0 849 128
- EP-A1- 1 669 255
- EP-A2- 0 741 062
- WO-A-2005/092674
- DE-A1- 4 409 405
- DE-A1- 19 828 975
- DE-A1- 19 929 762
- DE-C1- 19 718 931
- GB-A- 2 366 765
- US-A- 5 685 056
- US-A1- 2004 021 303
- US-A1- 2004 239 085

## Beschreibung

Die Erfindung betrifft eine Gassackabdeckung zum Abdecken eines zum Schutz eines Fahrzeuginsassen in einem Kraftfahrzeug vorgesehenen, aufblasbaren Gassacks gemäß dem Oberbegriff des Anspruchs 1.

Gassackabdeckungen in Form von Gassackkappen zum Abdecken eines Gassacks eines Fahrzeuginsassen-Rückhaltesystems sind z.B. für Fahrergassäcke bekannt. Derartige Gassackkappen werden an dem Lenkrad eines Fahrzeuges so montiert, dass ein im Lenkrad angeordneter Gassack zur Fahrzeuginnenraumseite hin abgedeckt ist. Damit sich der Gassack im Auslösefall in den Fahrzeuginnenraum hinein entfalten kann, weist die Gassackkappe einen Bereich auf, der sich durch den Druck des sich entfaltenden Gassack öffnet (beispielsweise aufreißt), so dass sich der aufgeblasene Gassack durch die Öffnung der Gassackkappe in den Fahrzeuginnenraum hinein erstrecken kann.

Die Gassackkappen müssen einerseits im Auslösefall sicher und schnell aufreißen oder aufklappen, andererseits müssen sie formstabil sein und eine dauerhafte Verbindung mit dem Lenkrad bzw. sonstigen Fahrzeugteilen gewährleisten. Hierzu müssen Befestigungsstrukturen an der Gassackkappe ausgebildet sein, die zum Beispiel ein Verrasten oder ein Vernieten der Gassackkappe ermöglichen und zusätzlich auch die Befestigung von Anbauteilen - wie zum Beispiel Schaltern oder anderen Bedienelementen - zulassen.

Insbesondere zum Verschrauben von Anbauteilen werden bisher Gewindeeinsätze bzw. zusätzliche Einlegeteile in der Gassackkappe vorgesehen, um ein sicheres Verbinden der Anbauteile mit der Gassackkappe zu gewährleisten.

Die EP 0 808 750 A1 offenbart eine Lenkradvorrichtung mit einem starren Skelett, über dem eine durchgehende Kunststoffschicht angeordnet ist.

Darüber hinaus beschreibt die WO 2005/092674 A1 ein Airbagmodul mit einem ersten und einem zweiten Trägerteil sowie einer einen Airbag umgebenden Abdeckung.

Aus der EP 0 849 128 A1 ist zudem eine Airbagmodulabdeckung bekannt, die eine Basisstruktur aufweist, wobei ein Abdeckbereich der Basisstruktur z.B. mit einem geschäumten Kunststoff überzogen ist.

Das der Erfindung zugrunde liegende Problem besteht darin, eine Gassackabdeckung zur Verfügung zu stellen, die gegenüber den bisher bekannten Gassackabdeckungen einfacher und kostengünstiger herstellbar ist.

Dieses Problem wird durch die Gassackabdeckung mit den Merkmalen des Anspruchs 1 gelöst. Bevorzugte und vorteilhafte Weiterbildungen der Erfindung sind in den Unteransprüchen angegeben.

Danach wird eine Gassackabdeckung zum Abdecken eines zum Schutz eines Fahrzeuginsassen in einem Kraftfahrzeug vorgesehenen, aufblasbaren Gassacks bereitgestellt, die in dem Fahrzeug so in Bezug zu dem Gassack anzuordnen ist, dass sie den Gassack zum Fahrzeuginnenraum hin abdeckt und die einen Öffnungsbereich aufweist, der beim Entfalten des Gassacks unter der Einwirkung des sich entfaltenden Gassacks eine Öffnung freigibt, so dass sich der Gassack im Auslösefall durch die Öffnung der Gassackabdeckung hindurch in den Fahrzeuginnenraum hinein entfalten kann. Die Gassackabdeckung umfasst zwei Teile, von denen ein erstes Teil aus einem formstabileren Material besteht als ein zweites, den Öffnungsbereich aufweisendes Teil, in dem sich beim Entfalten des Gassacks die Öffnung für den Gassack bildet.

Des Weiteren umfasst das erste Teil eine durch eine Seitenwand begrenzte Durchgangsöffnung, die durch den Aufreißbereich des zweiten Teiles überdeckt ist, wobei die Seitenwand so beschaffen ist, dass sie den sich entfaltenden Gassack auf den Aufreißbereich lenkt, und
mit der Gassackabdeckung ein Anbauteil verbunden ist, wobei unmittelbar in dem ersten Teil Befestigungsstrukturen ausgebildet sind, über die das Anbauteil mit dem ersten Teil verbunden ist, oder das Anbauteil über unmittelbar in das Material des ersten Teils eingeschraubte Schrauben mit dem ersten Teil verbunden ist, und wobei
eine Seite des zweiten Teils eine Außenseite der Gassackabdeckung bildet, die nach Montage der Gassackabdeckung im Fahrzeug zum Fahrzeuginnenraum weist und ein den Öffnungsbereich umgebender, geschlossener Randabschnitt des zweiten Teils an seiner der Außenseite abgewandeten Seite mit einem den Durchgang zum Durchleiten des Gassacks umgebenden, geschlossenen Oberflächenabschnitt des ersten Teils verbunden ist.

Die Öffnungsfunktion der Gassackabdeckung für den sich entfaltenden Gassack wird demnach vom in dem weniger formstabilen (weicheren) Teil der Gassackabdeckung ausgebildeten Öffnungsbereich übernommen. Ein derartiger Öffnungsbereich ist in einem weniger formstabilen Teil einfacher zu realisieren, da Aufreißlinien - etwa durch gezielte Materialschwächungen - leichter und in der Herstellung kostengünstiger in einem weicheren Material erzeugt werden können als in einem formstabilen.

Weiterhin können die Befestigungsstrukturen ein Befestigen der Gassackabdeckung an einem Fahrzeugteil ermöglichen. Dies können zum Beispiel Befestigungsstrukturen für eine Rast-, Schraub- oder Nietverbindung sein. In dieser Ausgestaltung der Erfindung übernimmt das formstabilere Teil der Gassackabdeckung die Verbindungsfunktion, während die Aufklappfunktion zum Durchlassen eines sich entfaltenden Gassacks dem weniger formstabilen Teil zukommt. Über ein formstabiles Teil lässt sich eine Verbindung der Gassackabdeckung mit einem Fahrzeugteil zuverlässiger als in einem weniger formstabilen Teil realisieren. Umgekehrt ist die Realisierung eines Aufreißbereiches in einem weniger formstabilen Teil einfacher als in einem formstabilen Teil.

Somit wird eine Gassackabdeckung bereitgestellt, die in einfacher Weise produzierbar ist und dennoch die vielfältigen und zum Teil gegensätzlichen Anforderungen an eine Gassackabdeckung erfüllt. Insbesondere kann das weniger formstabile Material für das zweite Teil der Gassackabdeckung so gewählt werden, dass es seine Aufreißfunktion insbesondere auch in einem weiten Temperaturbereich von -35°C bis +85°C erfüllt.

Auf der anderen Seite wird über das erste, formstabilere Teil eine dauerhafte Verbindung der Gassackabdeckung mit einem Fahrzeugteil hergestellt. Es können in einfacher Weise zum Beispiel Schalter an ihm befestigt werden, wobei z.B. auch selbstschneidende Kunststoffschrauben verwendet werden können. Insbesondere ist über die Schraubverbindung für einen Reparaturfall eine Wiederverschraubfähigkeit der Gassackabdeckung mit dem Fahrzeugteil gegeben.

Dadurch, dass die Verbindung der Gassackabdeckung mit einem Fahrzeug bzw. von Anbauteilen an der Gassackabdeckung direkt über das formstabilere Teil der Gassackabdeckung erfolgt, ist es nicht nötig, zusätzliche Gewindeeinsätze, Einlegeteile oder sonstige Hilfsmittel in die Gassackabdeckung einzubringen, um eine stabile Verbindung herzustellen. Die in dem ersten, formstabileren Teil der Gassackabdeckung mit ausgebildeten Befestigungsstrukturen bewirken eine erhebliche Reduzierung des Fertigungsaufwandes und damit der mit der Fertigung verbundenen Kosten.

Das direkte Ausbilden von Befestigungsstrukturen an der Gassackabdeckung (über das formstabilere Teil) löst auch das Problem, dass nachträglich in eine Gassackkappe eingebrachte Gewindeeinsätze keine ausreichende Schälfestigkeit zum Material der Gassackkappe aufweisen. Bei der erfindungsgemäßen Gassackkappe werden die Befestigungsstrukturen direkt ausgebildet bzw. es werden Schrauben direkt in das formstabilere Material des ersten Teils eingeschraubt.

Ein weiterer Vorteil der erfindungsgemäßen Gassackabdeckung ist, dass sich über das formstabilere Teil auch Hupkräfte übertragen lassen, ohne dass dieses sich dabei elastisch verformt. Die erfindungsgemäße Gassackabdeckung bleibt über ihre Lebensdauer somit insgesamt formstabil.

Die Gassackabdeckung ist an einem Fahrzeugteil befestigt, womit zum Beispiel auch ein Teil eines Gassackmoduls eines Insassen-Rückhaltesystem gemeint sein kann. Im Falle eines Fahrergassacks ist die Gassackabdeckung an einem Bauteil des Lenkrades eines Fahrzeugs angebracht. Die erfindungsgemäße Gassackabdeckung ist aber nicht auf Fahrergassäcke beschränkt, sondern kann je nach Anforderung auch zum Abdecken von anderen Gassäcken einer Insassenschutz-Vorrichtung verwendet werden.

In einer bevorzugten Weiterbildung der Erfindung sind die beiden Teile korrespondierend zueinander ausgebildet und so zueinander angeordnet, dass nach Montage der Gassackabdeckung in einem Fahrzeug das erste Teil dem Fahrzeuginnenraum abgewandt und das zweite Teil dem Fahrzeuginnenraum zugewandt ist.

"Korrespondierend" bedeutet z.B., dass der Umriss der beiden Teile näherungsweise gleich ist, so dass sich beide Teile in der Gassackabdeckung komplett überdecken. Darüber hinaus können auch korrespondierende Strukturen an den beiden Teilen vorgesehen sein, die in der Gassackabdeckung zusammenwirken sollen (z.B. Öffnungen) und dazu in den beiden Teilen mit gleicher Form ausgebildet und Position in Bezug auf den Umriss des jeweiligen Teils angeordnet sind, so dass in der Gassackabdeckung übereinander liegen.

Das erste Teil kann darüber hinaus näherungsweise quer zur Seitenwand verlaufende Rippenstrukturen aufweisen, die die Seitenwand des Durchgangs stabilisieren.

Der Randbereich des zweiten Teils verläuft im Wesentlichen flach und kann dem ersten Teil angeformt sein, wobei sich das zweite Teil aufgrund seiner weicheren Ausbildung der Form Oberfläche des ersten Teils anpasst.

Das weniger formstabile Teil kann aus einem weichen oder flexiblen Material gebildet sein, während das formstabilere aus einem harten Material gebildet ist. In besonders vorteilhafter Weise sind sowohl das weiche als auch das harte Teil der Gassackabdeckung aus einem Kunststoff gebildet. Vorteilhafterweise stammt der Kunststoff für das erste, formstabile Teil aus der gleichen Kunststofffamilie wie der Kunststoff für das zweite, weiche Teil. Dies bringt Vorteile in Hinblick auf die Abschälfestigkeit der beiden Materialien zueinander. Darüber hinaus ergibt sich ein recyclingfreundliches Bauteil, da zwei ähnliche Kunststoffe verwendet werden.

Zur Herstellung einer derartigen, aus Kunststoff gebildeten Gassackabdeckung kommt insbesondere ein 2K (Zweikomponenten)-Spritzgussverfahren infrage. Hierbei wird das formstabilere Teil aus einem harten Kunststoff (zum Beispiel Dym 1300) hergestellt und mit einer weichen Komponente als zweitem Teil versehen (beispielsweise aus dem Kunststoff Dym 250S gebildet). Beim 2K-Spritzguss werden nacheinander zwei unterschiedliche Kunststoffkomponenten (insbesondere eine harte und eine weiche Komponente) in ein Spritzgusswerkzeug eingespritzt, wodurch ein aus zwei stoffschlüssig miteinander verbundenen Komponenten bestehendes Spritzgussteil entsteht. Mittels des 2K-Spritzgussverfahren erfolgt somit eine stoffschlüssige Verbindung der beiden Teile der Gassackabdeckung.

In dem weicheren Teil kann zudem auf einfache Weise eine besondere Oberflächenhaptik eingebracht werden, z.B. direkt bei seiner Herstellung mittels 2K-Spritzguss.

In besonders vorteilhafter Weise wird die Gassackabdeckung, wie erwähnt, in einem Gassackmodul für ein Fahrzeuginsassen-Rückhaltesystem verwendet. Dabei kann es sich insbesondere um ein Fahrergassackmodul handeln, das insbesondere in dem Lenkrad eines Fahrzeuges anzuordnen ist.

Ein Lenkrad mit einem solchen Gassackmodul weist dann neben dem aufblasbaren Gassack auch einen Gasgenerator zum Aufblasen des Gassacks auf. Die Gassackabdeckung bildet eine Gassackabdeckung für den Gassack, die z.B. den Mittelbereich des Lenkrades zum Fahrzeuginsassenraum hin abschließt. Dabei können Anbauteile, wie zum Beispiel Schalter für eine Hupe oder weitere Bedienelemente, über die Gassackabdeckung mit dem Lenkrad verbunden und mit weiteren Einrichtungen des Lenkrads gekoppelt sein.

Die Erfindung wird im Folgenden unter Bezugnahme auf die Figuren anhand von Ausführungsbeispielen im Einzelnen erläutert.

Es zeigen:
- Fig. 1a: eine Ausführungsform einer Gassackabdeckung zum Abdecken eines Gassacks;
- Fig. 1b: eine Schnittansicht der Gassackabdeckung der Fig. 1 a;
- Fig. 2: ein erstes Teil einer Gassackabdeckung;
- Fig. 3: ein zweites Teil einer Gassackabdeckung.

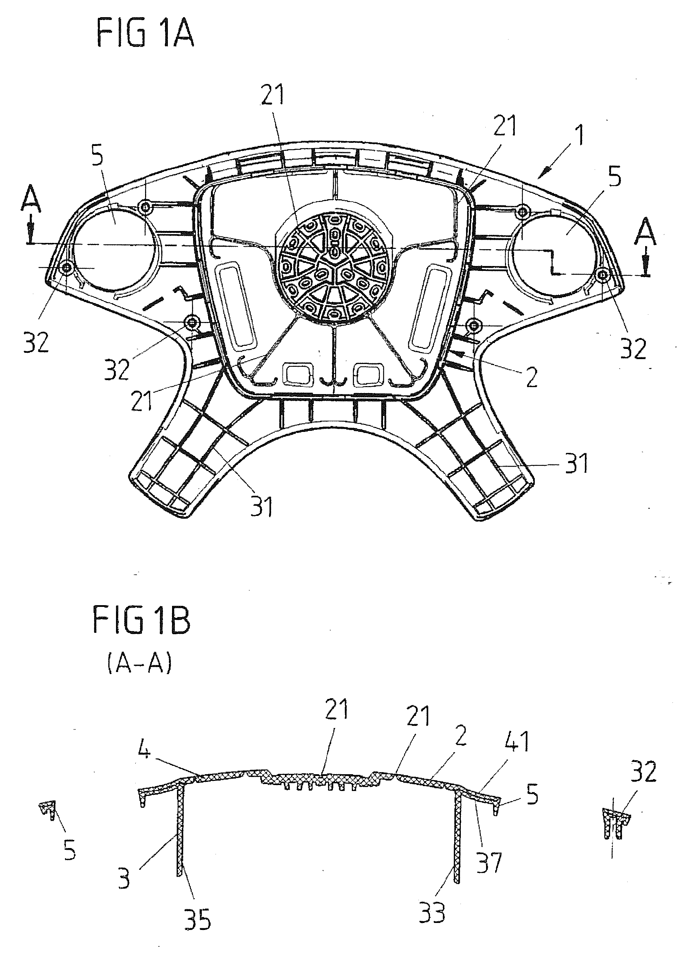

Die Fig. 1a zeigt eine Gassackkappe 1, die als Abdeckung eines Fahrergassacks (nicht dargestellt) vorgesehen ist und entsprechend an einem Lenkrad eines Fahrzeuges montiert werden soll. Die Gassackkappe 1 weist zwei Teile 3, 4 auf, wobei ein erstes Teil 3 aus einem harten, formstabilen Material und ein zweites Teil 4 aus einem weichen, im Vergleich zum ersten Teil 3 weniger formstabilen Material gebildet ist. Die Gassackkappe 1 wird so in Bezug auf einen Gassack in einem Fahrzeug angeordnet, dass sie den Gassack zum Innenraum des Fahrzeugs hin abdeckt. Das zweite Teil 4 ist hier über dem ersten Teil 3 angeordnet (vgl. Schnittdarstellung der Fig. 1 b) und bildet mit einer Seite die zum Fahrzeuginnenraum weisende Seite der Gassackkappe 1.

Das zweite Teil 4 weist einen zentralen Öffnungsbereich in Form eines Aufreißbereiches 2 auf, der eine Mehrzahl von Aufreißlinien 21 besitzt, die beim Entfalten des von der Gassackkappe abgedeckten Gassacks aufreißen. Durch das Aufreißen der Aufreißlinien 21 entsteht eine Öffnung in dem Aufreißbereich 2, durch die hindurch sich der Gassack entfalten kann.

In Fig. 1b, die einen Schnitt entlang der in der Figur 1a eingezeichneten Linie A-A darstellt, ist zu erkennen, dass das zweite Teil 4 so über dem ersten Teil 3 angeordnet ist, dass sich der Aufreißbereich 2 oberhalb eines in dem ersten Teil 3 ausgebildeten Durchgangs 33 befindet. Der Durchgang 33 des ersten Teils 3 ist durch eine Seitenwand 36 begrenzt, die über quer zu ihr angeordnete Rippen 31 stabilisiert ist. Der Durchgang 33 leitet den sich entfalteten Gassack dem Aufreißbereich 2 des zweiten Teils 4 zu.

Die Seitenwand 35 des Durchgangs 33 (unterstützt durch die Stabilisierungsrippen 31) lenkt den Entfaltungsdruck des Gassacks in Richtung auf den Aufreißbereich 2 des zweiten Teils 4. Dadurch kann der Druck des sich entfaltenden Gassacks nahezu vollständig auf die Aufreißlinien 21 des Aufreißbereiches wirken, wodurch ein schnelles und sicheres Aufreißen des Aufreißbereiches ermöglicht wird.

Zur Verbindung des zweiten Teils 4 mit dem ersten Teil 3 der Gassackkappe 1 ist eine im montierten Zustand der Gassackkappe vom Fahrzeuginnenraum abgewandte Seite eines Randabschnittes 41 des zweiten Teils, der sich um den Aufreißbereich 2 geschlossen herum erstreckt, mit einem den Durchgang 33 umgebenden Oberflächenabschnitt 37 des ersten Teils 3 stoffschlüssig verbunden. Diese Verbindung kann insbesondere so erfolgen, dass der Aufreißbereich 2 oberhalb des Durchgangs 33 straff gespannt verläuft.

Durch eine straffe Spannung des Aufreißbereiches 2 soll vermieden werden, dass beim Entfalten des Gassacks Deformationen im zweiten Teil 4 entstehen, wodurch die Energie des sich entfaltenden Gassacks verringert würde. Die Entfaltungsenergie des Gassacks soll jedoch möglichst vollständig zum Aufreißen des Aufreißbereiches 2 zur Verfügung stehen, damit dieser schnell aufreißt und sich der Gassack entsprechend schnell in den Fahrzeug-Innenraum hinein entfalten kann.

Während die Aufreißfunktion der Gassackkappe 1 von dem weichen zweiten Teil 4 übernommen wird, sorgt das formstabilere erste Teil 3 für die notwendige Steifigkeit der Gassackkappe 1 und dient gleichzeitig dazu, die Gassackkappe 1 an einem Lenkradteil zu befestigen. Zur Befestigung an einem Lenkrad weist das erste Teil Gewindebohrungen 32 als Befestigungsstrukturen auf, über die sich die Gassackkappe 1 an einem Lenkradteil verschrauben lässt.

Die Gassackkappe 1 besitzt des Weiteren kreisförmige Öffnungen 5, die durch übereinander liegende, korrespondierende Öffnungen in dem ersten Teil 3 bzw. in dem zweiten Teil 4 gebildet sind. Die Öffnungen 5 ermöglichen einen Zugang zu am Lenkrad angeordneten Bedienelementen (nicht dargestellt).

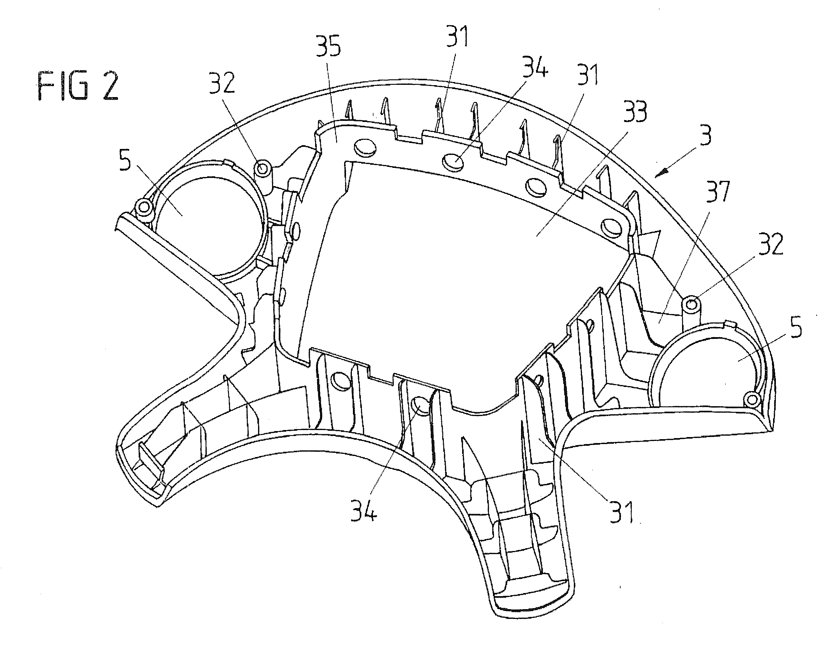

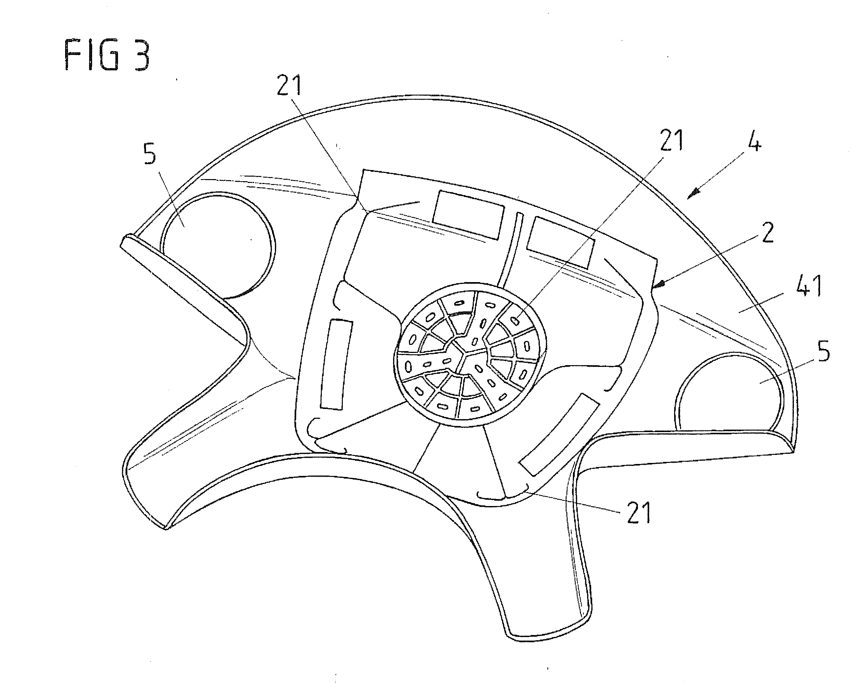

Die Gassackkappe 1 mit den beiden Teile 3, 4 wird mittels eines 2-Komponenten-Spritzguss-Verfahrens hergestellt. Hierbei ist das erste Teil 3 ein Vorspritzling (vgl. Fig. 2), der aus einem formstabilen Material gebildet ist, während das zweite Teil 4 als Fertigspritzling (vgl. Fig. 3) aus einem weichen Material hergestellt wird.

Die Figur 2 ist eine vergrößerte Darstellung eines aus einem harten Material gebildeten Vorspritzlings 3 für eine Gassackkappe. Der Vorspritzling 3 weist einen zentralen Durchgang 33 auf, der in der fertigen Gassackkappe durch einen Aufreißbereich eines aus einem weichen Material gebildeten Fertigspritzlings überdeckt ist (vgl. Figuren 1a, 1b). Durch den Durchgang 33 hindurch entfaltet sich im Auslösefall der Gassack (nicht dargestellt). Die durch eine mittels einer Rippenstruktur 31 stabilisierte Seitenwand 35 begrenzter Durchgang bildet einen "Kanal", der den sich entfaltenden Gassack auf den Aufreißbereich der Gassackkappe lenkt.

Zusätzlich zu Gewindebohrungen 32 weist der Vorspritzling 3 Befestigungsöffnungen 34 auf, die entlang des zentralen Durchgangs 33 angeordnet sind und ebenfalls zum Befestigen des Vorspritzlings (und damit der gesamten Gassackkappe) an einem Lenkradteil dienen.

Figur 3 zeigt einen aus einem weichen Material gebildeten Fertigspritzling 4, der korrespondierend zu dem Vorspritzling 3 der Figur 2 ausgebildet ist und mit diesem zusammen eine Gassackkappe bilden soll. Es ist zu erkennen, dass der Fertigspritzling 4 einen zentralen Aufreißbereich 2 aufweist, der durch den Entfaltungsdruck eines Gassacks entlang von Aufreißlinien 21 aufreißen soll.

Dadurch, dass der Fertigspritzling 4 aus einem weichen Material gebildet ist, ist ein einfaches und sicheres Aufreißen des Aufreißbereiches 2 möglich, so dass sich der Gassack im Auslösefall möglichst ungehindert durch die Gassackkappe (gebildet durch den Vorspritzling der Figur 2 und dem Fertigspritzling der Figur 3) entfalten kann. Zusätzlich ist es möglich, auf der dem Fahrzeuginnenraum zugewandten Seite des Fertigspritzlings 4 (in Figur 3 nicht dargestellt) Designelemente vorzusehen bzw. eine spezielle Oberflächenhaptik auszubilden. Dies kann mit einem Spritzgussteil aus einem weichen Material in einfacher Weise erfolgen.

### Bezugszeichenliste

- 1: Gassackkappe
- 2: Aufreißbereich
- 21: Aufreißlinie
- 3: Vorspritzling
- 31: Rippenstruktur
- 32: Gewindebohrung
- 33: Durchgang
- 35: Seitenwand
- 36: Stabilisierungsrippe
- 37: Randabschnitt
- 4: Fertigspritzling
- 41: Oberflächenabschnitt
- 5: Öffnung

## Patentansprüche

1. Gassackmodul für ein Fahrzeuginsassen-Rückhaltesystem, mit
- einer Gassackabdeckung (1) zum Abdecken eines zum Schutz eines Fahrzeuginsassen in einem Kraftfahrzeug vorgesehenen, aufblasbaren Gassacks, die
- in dem Fahrzeug so in Bezug zu dem Gassack anzuordnen ist, dass sie den Gassack zum Fahrzeuginnenraum hin abdeckt, und
- die einen Öffnungsbereich aufweist, der beim Entfalten des Gassacks unter der Einwirkung des sich entfaltenden Gassacks eine Öffnung freigibt, so dass sich der Gassack im Auslösefall durch die Öffnung der Gassackabdeckung hindurch in den Fahrzeuginnenraum hinein entfalten kann, wobei
- die Gassackabdeckung (1) zwei Teile (3, 4) umfasst, von denen ein erstes Teil (3) aus einem formstabileren Material besteht als ein zweites, den Öffnungsbereich in Form eines Aufreißbereiches aufweisendes Teil (4), in dem sich beim Entfalten des Gassacks die Öffnung für den Gassack bildet,
**dadurch gekennzeichnet, dass**
das erste Teil (3) eine durch eine Seitenwand (35) begrenzte Durchgangsöffnung (33) aufweist, die durch den Aufreißbereich des zweiten Teiles (4) überdeckt ist, wobei die Seitenwand (35) so beschaffen ist, dass sie den sich entfaltenden Gassack auf den Aufreißbereich lenkt, wobei
mit der Gassackabdeckung (1) ein Anbauteil verbunden ist, wobei unmittelbar in dem ersten Teil (3) Befestigungsstrukturen ausgebildet sind, über die das Anbauteil mit dem ersten Teil (3) verbunden ist, oder das Anbauteil über unmittelbar in das Material des ersten Teils (3) eingeschraubte Schrauben mit dem ersten Teil (3) verbunden ist, und wobei
eine Seite des zweiten Teils (4) eine Außenseite der Gassackabdeckung bildet, die nach Montage der Gassackabdeckung im Fahrzeug zum Fahrzeuginnenraum weist und ein den Öffnungsbereich (2) umgebender, geschlossener Randabschnitt (41) des zweiten Teils (4) an seiner der Außenseite abgewandeten Seite mit einem den Durchgang (33) zum Durchleiten des Gassacks umgebenden, geschlossenen Oberflächenabschnitt (37) des ersten Teils (3) verbunden ist.

2. Gassackmodul nach Anspruch 1, **dadurch gekennzeichnet, dass** die Gassackabdeckung (1) im Öffnungsbereich (2) mindestens eine durch Materialschwächung gebildete Aufreißlinie (21) aufweist, die beim Entfalten des Gassacks aufreißt.

3. Gassackmodul nach Anspruch 1 oder 2, **dadurch gekennzeichnet, dass** das erste Teil (3) Befestigungsstrukturen (32, 34) aufweist, die ein Befestigen der Gassackabdeckung (1) an einem Fahrzeugteil ermöglichen.

4. Gassackmodul nach Anspruch 3, **dadurch gekennzeichnet, dass** die Befestigungsstrukturen (32, 34) eine Rast-, Schraub- oder Nietverbindung ermöglichen.

5. Gassackmodul nach einem der vorhergehenden Ansprüche, **dadurch gekennzeichnet, dass** die beiden Teile (3, 4) korrespondierend zueinander ausgebildet und so zueinander angeordnet sind, dass nach Montage der Gassackabdeckung in dem Fahrzeug das erste Teil (3) dem Fahrzeuginnenraum abgewandt und das zweite Teil (4) dem Fahrzeuginnenraum zugewandt ist.

6. Gassackmodul nach einem der vorhergehenden Ansprüche, **dadurch gekennzeichnet, dass** das erste Teil (3) näherungsweise quer zur Seitenwand (35) verlaufende Rippenstrukturen (31) aufweist, die die Seitenwand (35) des Durchgangs (33) stabilisieren.

7. Gassackmodul nach einem der vorhergehenden Ansprüche, **dadurch gekennzeichnet, dass** die beiden Teile (3, 4) stoffschlüssig miteinander verbunden sind.

8. Gassackmodul nach einem der vorhergehenden Ansprüche, **dadurch gekennzeichnet, dass** das erste Teil (3) aus einem harten und das zweite Teil (4) aus einem weichen Material gebildet ist.

9. Gassackmodul nach einem der vorhergehenden Ansprüche, **dadurch gekennzeichnet, dass** die beiden Teile (3, 4) aus Kunststoff gebildet sind.

10. Gassackmodul nach Anspruch 9, **dadurch gekennzeichnet, dass** der Kunststoff des ersten Teils (3) der gleichen Kunststofffamilie zugehört wie der Kunststoff des zweiten Teils (4).

11. Gassackmodul nach einem der vorhergehenden Ansprüche, **dadurch gekennzeichnet, dass** die beiden Teile (3, 4) Spritzgussteile sind.

12. Gassackmodul nach einem der vorhergehenden Ansprüche, **dadurch gekennzeichnet, dass** es sich bei dem Anbauteil um einen Schalter handelt.

## Claims

1. Airbag module for a vehicle occupant restraint system, having
- an airbag covering (1) for covering an inflatable airbag provided for the protection of a vehicle occupant in a motor vehicle, which airbag covering
- is to be arranged in the vehicle with respect to the airbag such that it covers the airbag toward the vehicle interior, and
- has an opening region which, during the deployment of the airbag, releases an orifice under the action of the deploying airbag, so that the airbag, when triggered, can be deployed through the orifice of the airbag covering into the vehicle interior,
- the airbag covering (1) comprising two parts (3, 4), of which a first part (3) consists of a more dimensionally stable material than a second part (4) which has the opening region in the form of a tear-open region and in which the orifice for the airbag is formed during the deployment of the airbag, **characterized in that**
the first part (3) has a passage orifice (33) which is delimited by a sidewall (35) and which is covered by the tear-open region of the second part (4), the sidewall (35) being such that it guides the deploying airbag to the tear-open region,
an add-on component being connected to the airbag covering (1), fastening structures being formed directly in the first part (3), the add-on component being connected to the first part (3) by means of which fastening structures, or the add-on component being connected to the first part (3) by means of screws screwed directly into the material of the first part (3), and one side of the second part (4) forming an outside of the airbag covering which points toward the vehicle interior after the mounting of the airbag covering in the vehicle and a closed marginal portion (41), surrounding the opening region (2), of the second part (4) being connected, on its side facing away from the outside, to a closed surface portion (37), surrounding the passage (33) for leading through the airbag, of the first part (3).

2. Airbag module according to Claim 1, **characterized in that** the airbag covering (1) has in the opening region (2) at least one tear-open line (21) which is formed by material weakening and which tears open during the deployment of the airbag.

3. Airbag module according to Claim 1 or 2, **characterized in that** the first part (3) has fastening structures (32, 34) which make it possible to fasten the airbag covering (1) to a vehicle part.

4. Airbag module according to Claim 3, **characterized in that** the fastening structures (32, 34) allow a latch, screw or rivet connection.

5. Airbag module according to one of the preceding claims, **characterized in that** the two parts (3, 4) are designed to correspond to one another and are arranged with respect to one another such that, after the mounting of the airbag covering in the vehicle, the first part (3) faces away from the vehicle interior and the second part (4) faces the vehicle interior.

6. Airbag module according to one of the preceding claims, **characterized in that** the first part (3) has rib structures (31) which run approximately transversely with respect to the sidewall (35) and stabilize the sidewall (35) of the passage (33).

7. Airbag module according to one of the preceding claims, **characterized in that** the two parts (3, 4) are connected to one another in a materially integral manner.

8. Airbag module according to one of the preceding claims, **characterized in that** the first part (3) is formed from a hard material and the second part (4) from a soft material.

9. Airbag module according to one of the preceding claims, **characterized in that** the two parts (3, 4) are formed from plastic.

10. Airbag module according to Claim 9, **characterized in that** the plastic of the first part (3) belongs to the same plastic family as the plastic of the second part (4).

11. Airbag module according to one of the preceding claims, **characterized in that** the two parts (3, 4) are injection moldings.

12. Airbag module according to one of the preceding claims **characterized in that** the add-on component is a switch.

## Revendications

1. Module de sac de gaz pour un système de retenue d'occupant d'un véhicule, comprenant :
- un recouvrement de sac de gaz (1) pour recouvrir un sac de gaz gonflable prévu dans un véhicule automobile pour protéger un occupant du véhicule, lequel recouvrement
- doit être disposé dans le véhicule par rapport au sac de gaz de telle sorte qu'il recouvre le sac de gaz vers l'habitacle du véhicule, et
- présente une région d'ouverture qui, lors du déploiement du sac de gaz, libère une ouverture sous l'action du sac de gaz se déployant, de telle sorte que le sac de gaz, en cas de déclenchement, puisse se déployer à travers l'ouverture du recouvrement de sac de gaz jusque dans l'habitacle du véhicule,
- le recouvrement de sac de gaz (1) comprenant deux parties (3, 4) dont une première partie (3) se compose d'un matériau de forme plus stable qu'une deuxième partie (4) présentant la région d'ouverture sous la forme d'une région de déchirure, dans laquelle se forme l'ouverture pour le sac de gaz lors du déploiement du sac de gaz,
**caractérisé en ce que**
la première partie (3) présente une ouverture de passage (33) limitée par une paroi latérale (35), laquelle est recouverte par la région de déchirure de la deuxième partie (4), la paroi latérale (35) étant formée de telle sorte qu'elle oriente le sac de gaz se déployant sur la région de déchirure, une pièce rapportée étant raccordée au recouvrement de sac de gaz (1), des structures de fixation étant réalisées directement dans la première partie (3), par le biais desquelles la pièce rapportée est raccordée à la première partie (3), ou la pièce rapportée étant raccordée à la première partie (3) par le biais de vis vissées directement dans le matériau de la première partie (3), et
un côté de la deuxième partie (4) formant un côté extérieur du recouvrement de sac de gaz, qui, après le montage du recouvrement de sac de gaz dans le véhicule, est tourné vers l'habitacle du véhicule, et une portion de bord (41) fermée, entourant la région d'ouverture (2), de la deuxième partie (4) étant raccordée au niveau de son côté opposé au côté extérieur à une portion de surface (37) de la première partie (3) fermée, entourant le passage (33) pour guider le sac de gaz à travers.

2. Module de sac de gaz selon la revendication 1, **caractérisé en ce que** le recouvrement de sac de gaz (1) présente dans la région d'ouverture (2) au moins une ligne de déchirure (21) formée par un affaiblissement de matériau, laquelle se déchire lors du déploiement du sac de gaz.

3. Module de sac de gaz selon la revendication 1 ou 2, **caractérisé en ce que** la première partie (3) présente des structures de fixation (32, 34) qui permettent une fixation du recouvrement de sac de gaz (1) à une partie du véhicule.

4. Module de sac de gaz selon la revendication 3, **caractérisé en ce que** les structures de fixation (32, 34) permettent une connexion par encliquetage, vissage ou rivetage.

5. Module de sac de gaz selon l'une quelconque des revendications précédentes, **caractérisé en ce que** les deux parties (3, 4) sont réalisées de manière mutuellement correspondante, et sont disposées l'une par rapport à l'autre de telle sorte qu'après le montage du recouvrement de sac de gaz dans le véhicule, la première partie (3) soit tournée à l'opposé de l'habitacle du véhicule et la deuxième partie (4) soit tournée vers l'habitacle du véhicule.

6. Module de sac de gaz selon l'une quelconque des revendications précédentes, **caractérisé en ce que** la première partie (3) présente des structures nervurées (31) s'étendant approximativement transversalement à la paroi latérale (35), lesquelles stabilisent la paroi latérale (35) du passage (33).

7. Module de sac de gaz selon l'une quelconque des revendications précédentes, **caractérisé en ce que** les deux parties (3, 4) sont raccordées l'une à l'autre par engagement par liaison de matière.

8. Module de sac de gaz selon l'une quelconque des revendications précédentes, **caractérisé en ce que** la première partie (3) est formée d'un matériau dur et la deuxième partie (4) est formée d'un matériau mou.

9. Module de sac de gaz selon l'une quelconque des revendications précédentes, **caractérisé en ce que** les deux parties (3, 4) sont formées de matière plastique.

10. Module de sac de gaz selon la revendication 9, **caractérisé en ce que** la matière plastique de la première partie (3) appartient à la même famille de plastique que la matière plastique de la deuxième partie (4).

11. Module de sac de gaz selon l'une quelconque des revendications précédentes, **caractérisé en ce que** les deux parties (3, 4) sont des pièces moulées par injection.

12. Module de sac de gaz selon l'une quelconque des revendications précédentes, **caractérisé en ce que** la pièce rapportée est un commutateur.
